# EUROPÄISCHE PATENTSCHRIFT

(11) **EP 2 423 034 B1**
(45) Veröffentlichungstag und Bekanntmachung des Hinweises auf die Patenterteilung: **11.05.2016**
(21) Anmeldenummer: 11178861.8
(22) Anmeldetag: 25.08.2011
(51) Int. Cl.: B60N 2/015, B60N 2/06

(54) **Befestigungsvorrichtung für eine Sitzeinrichtung**
Mounting device for a seat device
Dispositif de fixation pour un dispositif de siège

(30) Priorität: 26.08.2010 DE 202010008381 U
(43) Veröffentlichungstag der Anmeldung: 29.02.2012
(73) Patentinhaber: REIMO Reisemobil-Center GmbH, 63329 Egelsbach (DE)
(72) Erfinder: Hoffmann, Ralf, 64293 Darmstadt (DE); Holona, Günter, 63329 Egelsbach (DE)
(74) Vertreter: Katscher Habermann Patentanwälte

(56) Entgegenhaltungen:
- EP-A1- 1 209 024
- EP-A2- 1 118 498
- DE-U1- 29 500 474

## Beschreibung

Die Erfindung betrifft eine Befestigungsvorrichtung für eine Sitzvorrichtung, insbesondere für eine Sitzbank, in einem Fahrzeug, mit einem Befestigungsprofil, das auf einem Fahrzeugboden festlegbar ist und eine in Längsrichtung verlaufende Befestigungsnut mit einem Längsschlitz aufweist, und mit einer Kufe, die mit der Sitzeinrichtung verbindbar ist und die längs des Befestigungsprofils verschiebbar gelagert und in der Befestigungsnut des Befestigungsprofils formschlüssig festlegbar ist, wobei die Kufe an einer dem Befestigungsprofil zugewandten Unterseite eine in die Befestigungsnut ragende Seitenführungseinrichtung aufweist, die beabstandet zu dem Längsschlitz der Befestigungsnut eine seitliche Verlagerung der Kufe begrenzt.

Aus der Praxis ist es bekannt, dass Reisemobile eine in Längsrichtung des Fahrzeugs verschiebbare Sitzbank aufweisen können. Die verschiebbare Sitzbank kann in verschiedenen Positionen arretiert werden. Auf diese Weise kann die Sitzbank beispielsweise für die Fahrt in eine erste Position verschoben und dort festgelegt werden, die während der Fahrt vorteilhaft ist, während die Sitzbank zum Wohnen oder Schlafen in dem Reisemobil in eine zweite Position verschoben und dort als Liegefläche oder Teil einer Liegefläche genutzt werden kann.

Durch die Verwendung von verschiebbaren Sitzeinrichtungen und insbesondere von verschiebbaren Sitzbänken lässt sich ein Innenraum des Reisemobils besser nutzen. Seitlich neben der Sitzbank können Einbauschränke oder Regale angebracht werden, die durch ein Verschieben der Sitzbank einfach zugänglich sind und eine bessere und komfortablere Raumausnutzung ermöglichen.

Viele Reisemobile weisen einen Aufbau auf, der auf einem Fahrgestell eines Fahrzeugherstellers angeordnet ist. Die einzelnen Aufbauten werden von unterschiedlichen Reisemobilanbietern gegebenenfalls nach Kundenwunsch auf verschiedenen Fahrgestellen aufgebaut. Die verschiedenen Fahrgestelle weisen jeweils unterschiedlichen Abmessungen und insbesondere unterschiedliche Anordnungen tragender Teile und Fahrgestellelemente auf.

Die in dem jeweiligen Aufbau vorgesehene Sitzbank muss regelmäßig große Kräfte aufnehmen können, um während der Fahrt von mitfahrenden Personen genutzt werden zu dürfen. Aus diesem Grund muss die Sitzbank auf dem Fahrzeugboden festgelegt und üblicherweise mit tragenden Teilen wie beispielsweise Querstreben oder Längsstreben des Fahrgestells verbunden werden.

Zu diesem Zweck ist es aus der Praxis bekannt, Befestigungsprofile für die Sitzeinrichtung auf dem Fahrzeugboden anzuordnen und mit tragenden Teilen des Fahrgestells zu verschrauben, wie es beispielsweise in DE 295 00 474 U1, EP 1 118 498 A2 und EP 1 209 024 A1 beschrieben ist. Die Befestigungsprofile müssen deshalb hinsichtlich Ihrer Lage und der Befestigungspunkt an das jeweilige Fahrgestell angepasst werden. Um die Befestigungsprofile mit dem Fahrgestell verbinden zu können ist es zudem regelmäßig erforderlich, an einer Fahrzeugunterseite angeordnete Komponenten wie beispielsweise Tanks, Auspuffanlagen oder Dämmelemente abzunehmen, um zumindest bereichsweise die tragenden Elemente des Fahrgestells zugänglich zu machen und eine zuverlässige Befestigung der Befestigungsprofile zu ermöglichen. Neben den Einschränkungen hinsichtlich der Anordnung und Befestigungsmöglichkeiten der Befestigungsprofile ist demzufolge auch ein erheblicher Montageaufwand notwendig.

Es wird deshalb als eine Aufgabe der vorliegenden Erfindung angesehen, eine Befestigungsvorrichtung für eine Sitzeinrichtung so auszugestalten, dass deren Montage erleichtert wird, keine zusätzlichen Einschränkungen für die Anordnung und Befestigung der Befestigungsprofile vorgegeben werden sowie eine Verschiebung der Sitzeinrichtung auf einfache Weise mit wenig Kraftaufwand vorgenommen werden kann.

Diese Aufgabe wird erfindungsgemäß dadurch gelöst, dass das Befestigungsprofil mindestens eine Gleitfläche für die Kufe aufweist, die relativ zu einer die Befestigungsnut umgebenden Oberfläche erhaben angeordnet ist und dass Aussparungen oder Bohrungen im Bereich der Befestigungsnut zur Arretierung der Kufe beabstandet zu der mindestens einen Gleitfläche angeordnet sind.

Insbesondere dann, wenn entlang der Befestigungsnut beabstandet zueinander Aussparungen oder Bohrungen angeordnet sind, um die Kufe und damit die Sitzeinrichtung an einer vorgegebenen Position längs der Befestigungsnut festlegen zu können, weisen die seitlichen Begrenzungen der Befestigungsnut Kanten, Ausnehmungen und Vorsprünge auf. Durch eine demgegenüber erhaben angeordnete Gleitfläche für die Kufe kann sichergestellt werden, dass eine Unterseite der Kufe ausschließlich mit der Gleitfläche und nicht mit einer unregelmäßig und uneben ausgestalteten Oberfläche im Bereich um die Befestigungsnut in Kontakt kommt. Auf diese Weise wird eine Störung oder Beeinträchtigung eines Gleitvorgangs der Kufe auf der Gleitfläche vermieden.

Die Kufe kann an ihrer Unterseite Gleitrollen aufweisen, die um eine horizontale Achse drehbar gelagert sind und auf der Gleitfläche abrollen können. Zweckmäßigerweise ist deshalb vorgesehen, dass die Aussparungen oder Bohrungen im Bereich der Befestigungsnut zur Arretierung der Kufe beabstandet zu der mindestens einen Gleitfläche angeordnet sind.

Durch die räumliche Trennung zwischen den Aussparungen und Bohrungen längs der Befestigungsnut einerseits und der Gleitfläche andererseits, die zusätzlich erhaben gegenüber der Befestigungsnut angeordnet ist, wird gewährleistet, dass die Kufen auf einer dafür besonders geeigneten Gleitfläche verschoben werden können, ohne dass eine ebenfalls mögliche Verriegelung der Kufen an dem Befestigungsprofil deren Verschiebung entlang dem Befestigungsprofil beeinträchtigen könnte. Auf diese Weise wird ein sehr hoher Benutzungskomfort ermöglicht, da ein Verhaken oder Verkanten der Kufen an den Aussparungen oder Bohrungen ausgeschlossen werden kann.

Es ist erfindungsgemäß vorgesehen, dass das Befestigungsprofil eine dem Fahrzeugboden zugewandte Bodenplatte aufweist, deren Breite quer zur Längsrichtung des Befestigungsprofils mehr als 15 cm, vorzugsweise mehr als 20 cm oder mehr als 25 cm beträgt. Untersuchungen haben ergeben, dass durch die Verwendung einer derart breiten Bodenplatte das Befestigungsprofil unmittelbar auf dem Fahrzeugboden eines Fahrgestells verklebt werden kann. Bei einer geeigneten Verklebung ist das Befestigungsprofil ausreichend fest mit dem Fahrzeugboden verbunden, so dass eine formschlüssig in dem Befestigungsprofil festgelegte Sitzeinrichtung ebenfalls ausreichend fest und zuverlässig mit dem Fahrzeugboden, beziehungsweise mit dem Fahrgestell verbunden ist und die einschlägigen Anforderungen und Normen hinsichtlich der mechanischen Belastbarkeit der Sitzbefestigung erfüllt werden können. Zusätzliche Befestigungselemente sind nicht notwendig, so dass der für die Montage der Befestigungsprofile anfallende Aufwand erheblich reduziert werden kann.

Vorteilhafterweise ist vorgesehen, dass das Befestigungsprofil benachbart zu der Befestigungsnut mindestens einen kastenförmigen Hohlraum aufweist. Durch den kastenförmigen Hohlraum wird die Steifigkeit des Befestigungsprofils verbessert. Zudem wird die Befestigungsnut seitlich abgestützt, so dass sich die mechanische Belastbarkeit der Befestigungsnut erhöht und die Ausreißfestigkeit merklich verbessert wird. Zweckmäßigerweise weist das Befestigungsprofil zwei kastenförmige Hohlräume auf, die auf beiden Seiten der Befestigungsnut unmittelbar angrenzend angeordnet sind.

Gemäß einer vorteilhaften Ausgestaltung des Erfindungsgedankens ist vorgesehen, dass eine der Sitzeinrichtung zugewandte Oberseite des kastenförmigen Hohlraums einen kleineren Abstand zur Bodenplatte als eine Oberseite des die Befestigungsnut umgebenden Profilabschnitts aufweist. Um den Nutzkomfort eines Reisemobils zu erhöhen ist es üblich, einen wohnraumfreundlichen Bodenbelag zu verwenden und den Fahrzeugboden damit zu bedecken. Eine sichtbare Breite der Befestigungsprofile von 15 cm und mehr würde die Wohnraumfreundlichkeit eines Innenraums, beziehungsweise des Bodenbelags eines Reisemobils erheblich einschränken. Die für eine formschlüssige Festlegung der Kufen notwendigerweise von dem Innenraum aus zugängliche und deshalb auch sichtbare Befestigungsnut muss jedoch lediglich einige wenige Zentimeter breit sein.

Die Höhe der Befestigungsnut beträgt üblicherweise 2,5 cm oder mehr, um eine zuverlässige formschlüssige Festlegung der Kufen zu ermöglichen. Die angrenzenden kastenförmigen Hohlräume weisen dagegen lediglich eine Höhe von etwa 1 cm oder 1,5 cm auf, so dass sich ein Bodenbelag aus Teppichmaterial oder aus Holz bis auf die kastenförmigen Hohlräume und damit bis unmittelbar an die Befestigungsnut erstrecken kann. Auf diese Weise wird eine äußerst geringe Aufbauhöhe des Bodenbelags auf dem Fahrzeugboden ermöglicht und gleichzeitig eine besonders steife und ausreichend mechanisch belastbare Ausgestaltung des Befestigungsprofils erreicht. Die dem Fahrzeugboden zugewandte Bodenplatte kann eine Dicke von weniger als einem Millimeter bis hin zu mehreren Millimetern aufweisen. Die Aufbauhöhe des Bodenbelags sowie einer üblicherweise zwischen dem Bodenbelag und dem Fahrzeugboden angeordneten Isolierungsschicht wird dadurch nicht merklich beeinträchtigt.

In vorteilhafter Weise ist vorgesehen, dass die Befestigungsvorrichtung eine quer zu dem Befestigungsprofil angeordnete und sich seitlich über das Befestigungsprofil hinaus erstreckende Befestigungsplatte aufweist. Die Befestigungsplatte kann mit dem Fahrzeugboden verklebt werden und dient zur Festlegung des Befestigungsprofils. Da sich die Befestigungsplatte zumindest auch quer zu dem Befestigungsprofil erstreckt und in einem von der Befestigungsplatte bedeckten Abschnitt eine erheblich größere und vor allem breitere Auflagefläche bietet, die auf dem Fahrzeugboden aufliegt, können bereichsweise noch größere Kräfte von dem Befestigungsprofil in den Fahrzeugboden eingeleitet werden.

Einer Ausgestaltung des Erfindungsgedankens zufolge ist vorgesehen, dass sich die Befestigungsplatte im Wesentlichen über die Breite des Fahrzeugbodens erstreckt. Auf diese Weise wird über die gesamte Breite des Fahrzeugbodens für eine Krafteinleitung des Befestigungsprofils nutzbar. Als Breite des Fahrzeugbodens wird dessen Erstreckung quer zur Fahrtrichtung bzw. quer zur Längsrichtung des Fahrzeugs angesehen.

Es ist jedoch ebenfalls möglich, dass sich die Breite der Befestigungsplatte nicht über die gesamte Breite des Fahrzeugbodens, sondern lediglich seitlich die Bodenplatte des Befestigungsprofils überragt und innerhalb eines Teilbereichs erstreckt, sofern über diesen Teilbereich bereits eine ausreichend große Krafteinleitung gewährleistet werden kann.

Um trotz der Befestigungsplatte eine möglichst geringe Aufbauhöhe zu ermöglichen ist vorgesehen, dass die Formgebung der Befestigungsplatte an Bereiche des Fahrzeugbodens angepasst ist, die keine nach oben vorspringende Versteifungselemente aufweisen. In den meisten Fahrzeugen weist eine dem Innenraum zugewandte Oberseite des Fahrzeugbodens sickenförmige Ausformungen auf, welche eine zusätzliche Versteifung des Fahrzeugbodens bewirken, der üblicherweise aus einem gegebenenfalls verkleideten oder mit einem Teppich oder einer Matte belegten Blech besteht, das auf einem Tragrahmen befestigt ist. Diese sickenförmigen Ausformungen sind oftmals in Längsrichtung ausgebildet, bzw. angeordnet und erstrecken sich nicht über die gesamte Länge bzw. Breite des Fahrzeugbodens.

Die Befestigungsplatte kann eine geringere Dicke als die Höhe der vorspringenden Versteifungselemente aufweisen und hinsichtlich ihrer Formgebung, bzw. ihres Umrisses an diejenigen Bereiche des Fahrzeugbodens angepasst sein, die keine derartigen sickenförmigen Ausformungen oder vergleichbare vorspringenden Versteifungselemente aufweisen. Auf diese Weise kann das Befestigungsprofil trotz der Verwendung einer Befestigungsplatte auf den vorspringenden Versteifungselementen aufliegend oder in einem geringen Abstand über den Versteifungselementen angeordnet werden, so dass eine gleichbleibend geringe Aufbauhöhe gewährleistet werden kann.

Um eine zusätzliche Festlegung der Befestigungsplatte zu ermöglichen ist vorgesehen, dass die Befestigungsplatte an vorgegebenen Zurrpunkten oder Befestigungspunkten an dem Fahrzeugboden festlegbar ist. Die Befestigungsplatte kann beispielsweise klemmend oder mittels geeigneter Befestigungsmittel wie beispielsweise Schrauben an den Zurrpunkten oder Befestigungspunkten festgelegt werden. Die Befestigungspunkte oder Zurrpunkte sind von dem Hersteller des Fahrzeugs vorgegeben und besonders gekennzeichnet, bzw. ausgewiesen. Sie weisen im Vergleich zu den umgebenden Bereichen eine erhöhte Festigkeit, bzw. Kraftaufnahme auf. Durch die Festlegung der Befestigungsplatte an derartigen Zurrpunkten oder Befestigungspunkten kann die über die Befestigungsplatte von dem Befestigungsprofil in den Fahrzeugboden maximal einleitbare Kraft merklich erhöht werden. Das Befestigungsprofil wird nicht nur mit einer Oberseite des Fahrzeugbodens, beispielsweise ein Blech, verbunden, sondern zusätzlich oder ausschließlich über die für eine Kraftaufnahme besonders geeigneten Zurrpunkte und Befestigungspunkte an dem Fahrzeugboden festgelegt.

Um eine Ausrichtung des Befestigungsprofils zu erleichtern, die für eine möglichst leichte Verschiebung der Kufen der Sitzeinrichtung in dem Längsschlitz der Befestigungsnut entlang des Befestigungsprofils ausschlaggebend ist, ist vorgesehen, dass die Befestigungsplatte Führungselemente für das Befestigungsprofil aufweist. Das Befestigungsprofil kann in einfacher Weise relativ zu der Befestigungsplatte ausgerichtet und an der Befestigungsplatte festgelegt werden. In vorteilhafter Weise ist vorgesehen, dass an beiden Endbereichen des Befestigungsprofils oder zumindest in Längsrichtung im Abstand zueinander zwei Befestigungsplatten auf dem Fahrzeugboden festgelegt werden und zur Ausrichtung und Festlegung des Befestigungsprofils verwendet werden.

Gemäß einer vorteilhaften Ausgestaltung des Erfindungsgedankens ist vorgesehen, dass die Befestigungsplatte Befestigungsmittel zur Festlegung eines Befestigungsprofils aufweist. Die Befestigungsmittel können Gewindebohrungen in der Befestigungsplatte sein, in die Befestigungsschrauben eingedreht werden können, mit denen das Befestigungsprofil formschlüssig auf der Befestigungsplatte befestigbar ist. Die Befestigungsmittel können auch Ausformungen oder Rastelemente sein, die eine formschlüssige oder kraftschlüssige, bzw. klemmende Festlegung des Befestigungsprofils an der Befestigungsplatte erleichtern.

Ein weiterer Schwerpunkt der Erfindung betrifft das Verschieben einer Sitzeinrichtung, die in einem derartigen Befestigungsprofil angeordnet und festgelegt ist. Da bereits einzelne Sitze und insbesondere eine Sitzbank oftmals ein ganz erhebliches Eigengewicht aufweisen und regelmäßig an mehreren Stellen längs einer Kufe mit der zugeordneten Befestigungsnut in Eingriff stehen, lassen sich die Sitzeinrichtungen nur schwer verschieben und verkanten häufig.

Um eine Verlagerung der Sitzeinrichtung bei einer Befestigungsvorrichtung der eingangs genannten Gattung zu erleichtern ist erfindungsgemäß vorgesehen, dass die Kufe an einer dem Befestigungsprofil zugewandten Unterseite eine in die Befestigungsnut ragende Seitenführungseinrichtung aufweist, die beabstandet zu dem Längsschlitz in der Befestigungsnut eine seitliche Verlagerung der Kufe begrenzt. Die Seitenführungseinrichtung wirkt einer seitlichen Auslenkung der Kufe entgegen, wie sie beispielsweise bei einer ungleichmäßigen Belastung der Sitzeinrichtung oder unmittelbar vor einem Verkanten während eines Verschiebevorgangs auftritt. Die seitliche Führung der Kufe kann überwiegend oder ausschließlich durch die Seitenführungseinrichtung bewirkt und gewährleistet werden, so dass die Randbereiche der den Längsschlitz begrenzenden Profilabschnitte nicht mehr in Kontakt mit der Kufe kommen müssen.

Dies ist insbesondere dann vorteilhaft, wenn in dem Längsschlitz beabstandet voneinander Bohrungen oder Ausnehmungen angeordnet sind, um die Kufe, beziehungsweise die Sitzeinrichtung mit in die Bohrungen oder Ausnehmungen ragenden Arretierungsbolzen oder dergleichen in einer gewünschten Position längs der Befestigungsnut festlegen zu können. Im Bereich der Ausnehmungen und Bohrungen sind Vorsprünge und Kanten unvermeidbar, die im Fall einer Berührung der Kufe mit der seitlichen Begrenzung des Längsschlitzes unweigerlich ein Verschieben der Kufe entlang des Längsschlitzes erschweren und behindern. Die erfindungsgemäße Seitenführungseinrichtung verhindert eine Berührung der Kufe mit den seitlichen Begrenzungen des Längsschlitzes. Stattdessen wird die Seitenführung durch einen Kontakt der Seitenführungseinrichtung mit einer Innenwand der Befestigungsnut bewirkt. Die Innenwand kann vollständig eben ausgestaltet sein, so dass während einer Verlagerung der Kufe in der Befestigungsnut keine Unebenheiten oder vorspringende Kanten das Verschieben der Kufe beeinträchtigen.

Vorzugsweise ist vorgesehen, dass die Seitenführungseinrichtung mindestens eine um eine vertikale Achse drehbare gelagerte Führungsrolle aufweist. Die Führungsrolle erleichtert eine Verlagerung der Kufe in Längsrichtung innerhalb der Befestigungsnut. Durch die Abrollbewegung der Führungsrolle werden die der Verschiebung der Kufe entgegenwirkenden Reibungskräfte verringert und die Geräuschentwicklung während eines Verschiebevorgangs minimiert.

Nachfolgend werden Ausführungsbeispiele des Erfindungsgedankens näher erläutert, die in der Zeichnung dargestellt sind. Es zeigt:
Figur 1 eine Schnittansicht durch ein erfindungsgemäßes Befestigungsprofil einer Befestigungsvorrichtung für eine Sitzeinrichtung, das auf einem Fahrzeugboden angeordnet und verklebt ist,
Figur 2 eine Schnittansicht des in Figur 1 abgebildeten Befestigungsprofils mit einer darin gelagerten und geführten Kufe,
Figur 3 eine Seitenansicht einer Kufe mit Gleitrollen, Führungsrollen, einem T-Anker und einem Arretierungsbolzen,
Figur 4 eine Schnittansicht durch einen Sitz, der in einem einzigen Befestigungsprofil gelagert und festgelegt ist,
Figur 5 eine Draufsicht auf einen Fahrzeugboden, auf dem eine Befestigungsplatte angeordnet und festgelegt ist, und
Figur 6 eine Schnittansicht gemäß Figur 1 durch das erfindungsgemäße Befestigungsprofil, das auf einer Befestigungsplatte festgelegt ist.

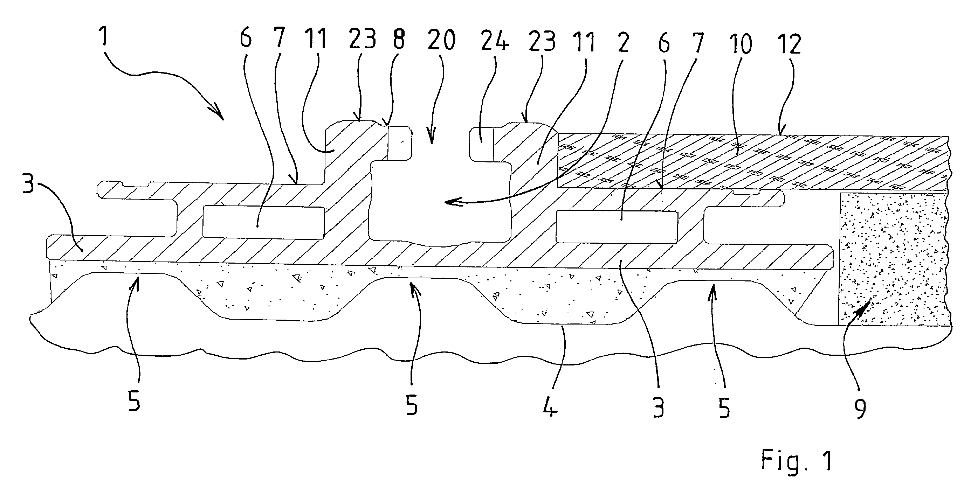

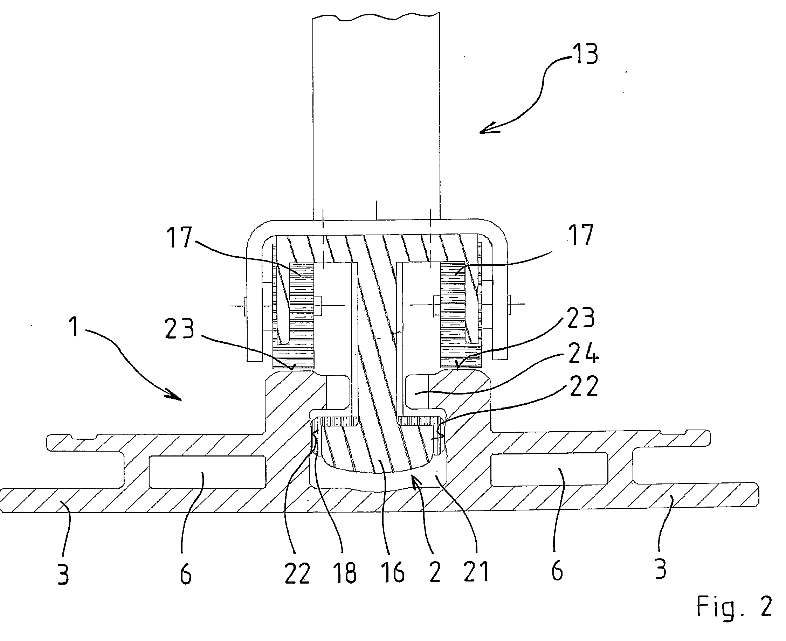

Ein in den Figuren 1 und 2 abgebildetes Befestigungsprofil 1 weist eine T-förmige Befestigungsnut 2 auf, die auf einer ebenen Bodenplatte 3 angeordnet, beziehungsweise ausgebildet ist. Die Bodenplatte 3 weist eine in den Figuren 1 und 2 in der Schnittansicht abgebildete Breite von etwa 20 cm auf. Das Befestigungsprofil 1 ist auf einem Fahrzeugboden 4 angeordnet, der im Bereich des Befestigungsprofils 1 mehrere Sicken 5 beziehungsweise ein wellenförmiges Profil aufweist.

Das Befestigungsprofil 1 ist abhängig von der Ausgestaltung des Fahrzeugbodens 4 mit mehreren beabstandet zueinander angeordneten Klebstoffraupen von etwa 20 mm Breite mit dem Fahrzeugboden 4 verklebt. Es ist ebenfalls denkbar, aus Gründen der Stabilität das Befestigungsprofil 1 über den gesamten Bereich der Bodenplatte 3 vollflächig mit dem Fahrzeugboden 4 zu verkleben. Eine zusätzliche Befestigung des Befestigungsprofils 1 mit dem Fahrzeugboden 4 oder mit tragenden Elementen eines in Figur 1 nicht dargestellten Fahrgestells ist nicht erforderlich. Aufgrund der Breite der Bodenplatte 3 wird durch die Verklebung des Befestigungsprofils 1 eine ausreichend große Rückhaltekraft des Befestigungsprofils 1 an dem Fahrzeugboden 4 erzeugt, so dass eine mit dem Befestigungsprofil 1 verbundene Sitzeinrichtung zuverlässig auf dem Fahrzeugboden 4 festgelegt werden kann.

Das Befestigungsprofil 1 weist auf beiden Seiten der Befestigungsnut 2 jeweils einen flachen, kastenförmigen Hohlraum 6 auf. Eine Oberseite 7 des kastenförmigen Hohlraums 6 mit einer rechteckigen Querschnittsfläche weist einen Abstand zu einer Oberseite 8 der Befestigungsnut 2 auf. Die Höhe des Befestigungsprofils 1 im Bereich des kastenförmigen Hohlraums 6 ist lediglich etwa halb so hoch wie die Höhe des Befestigungsprofils 1 im Bereich der Befestigungsnut 2. Ein nachträglich auf dem Fahrzeugboden 4 und einer an das Befestigungsprofil 1 angrenzenden Isolierschicht 9 verlegter Bodenbelag 10 kann auf den kastenförmigen Hohlräumen 6 bis an eine seitliche Begrenzungswand 11 der Befestigungsnut 2 herangeführt werden. Von dem Befestigungsprofil 1 ist nach der Verlegung des Bodenbelags 10 lediglich ein schmaler Bereich um die Befestigungsnut 2 herum sichtbar. Durch die an die Befestigungsnut angrenzenden kastenförmigen Hohlräume 6 wird die Steifigkeit und mechanische Belastbarkeit des Befestigungsprofils 1 erhöht. Gleichzeitig wird die Aufbauhöhe für den Bodenbelag 10 möglichst gering gehalten, so dass eine Oberseite 12 des Bodenbelags 10 trotz des Befestigungsprofils 1 sowie einer angrenzenden Isolierschicht 9 lediglich einen Abstand von etwa 2,5 cm zu dem Fahrzeugboden 4 aufweisen muss.

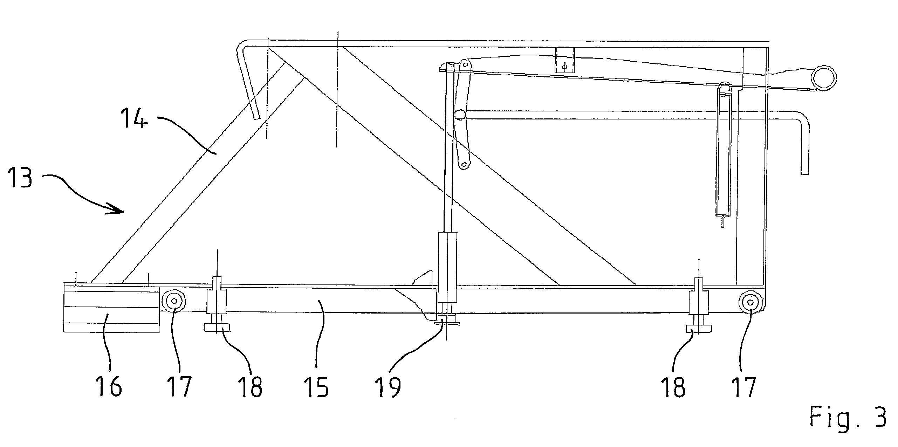

In den Figuren 2 und 3 wird ein exemplarisches Ausführungsbeispiel für eine Kufe 13 dargestellt. Die Kufe 13 weist einen Stützrahmen 14 für eine auf der Kufe 13 angeordnete Sitzbank auf, die in den Figuren nicht dargestellt ist. An einer unteren Längsstrebe 15 des Stützrahmens 14 der Kufe 13 sind ein Befestigungsanker 16, zwei Laufrollen 17, zwei Führungsrollen 18 und ein vertikal über einen Hebelmechanismus verlagerbarer Arretierungsbolzen 19 angeordnet.

Der Befestigungsanker 16 ragt in die Befestigungsnut 2 und wird durch die seitlich über einen Längsschlitz 20 der Befestigungsnut 2 vorspringende Seitenflansche in der Befestigungsnut 2 zurückgehalten. Der Befestigungsanker 16 ist ausreichend groß dimensioniert, so dass auch bei einer plötzlich auftretenden mechanischen Belastung, wie sie beispielsweise bei einem Unfall möglich wäre, die Kufe 13 zuverlässig in dem Befestigungsprofil 1 gehalten wird.

Die um eine vertikale Drehachse drehbar gelagerten Führungsrollen 18 befinden sich ebenfalls innerhalb der T-förmig ausgestalteten Befestigungsnut 2 und rollen seitlich an den Innenraum 21 der Befestigungsnut 2 begrenzenden Innenwänden 22 ab. Die Führungsrollen 18 bilden Seitenführungselemente, welche eine seitliche Auslenkung der Kufe 13 relativ zu der Befestigungsnut 2, beziehungsweise zu dem Befestigungsprofil 1 verhindern, ohne dass der Befestigungsanker 16 im Bereich des Längsschlitzes 20 mit den unregelmäßig gestalteten seitlichen Begrenzungswänden in Kontakt kommt.

Die um eine horizontale Drehachse drehbar an der Längsstrebe 15 des Stützrahmens 14 der Kufe 13 gelagerten Laufrollen 17 rollen auf Gleitflächen 23 des Befestigungsprofils 1 ab. Die auf beiden Seiten des Längsschlitzes 20 der Befestigungsnut 2 angeordneten Gleitflächen 23 sind etwas erhaben relativ zu einem Bereich unmittelbar um den Längsschlitz 20 angeordnet. In diesem Bereich angeordnete Bohrungen 24, in denen der Arretierungsbolzen 19 festgelegt werden kann, sind auf einen Bereich zwischen den beiden Gleitflächen 23 beschränkt, so dass die auf den Gleitflächen 23 abrollenden Laufrollen 17 währende einer Verlagerung der Kufe 13 in der Befestigungsnut 2 nicht mit unebenen Oberflächen in einem Bereich um den Längsschlitz 20 in Berührung kommen.

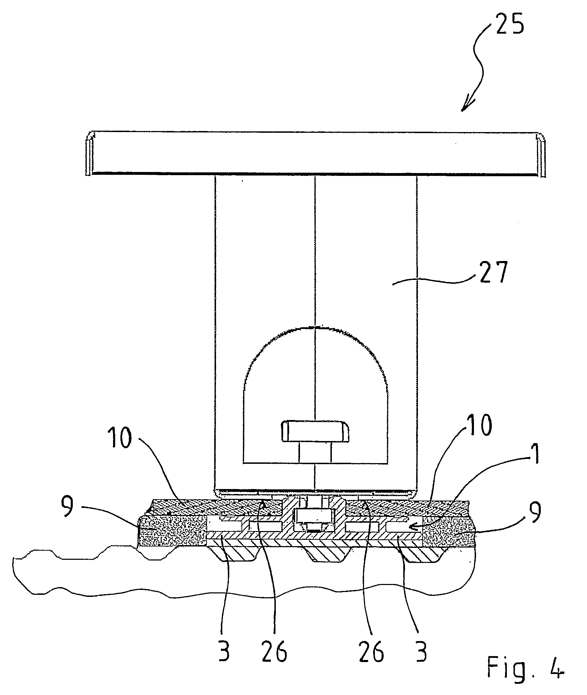

Ein in einer Schnittansicht in Figur 4 exemplarisch abgebildeter Sitz 25 ist über eine Kufe 13 in einem einzigen Befestigungsprofil 1 festgelegt. Die breite Bodenplatte 3 und der auf den kastenförmigen Hohlräumen 6 verlegte Bodenbelag 10 bilden eine ausreichend stabile und hinreichend breite Auflagefläche für eine Unterseite 26 eines Sockels 27 des Sitzes 25. Die Verwendung von zwei nebeneinander angeordneten Befestigungsprofilen 1 ist nicht erforderlich, da die auftretenden Querkräfte über das eine Befestigungsprofil 1 aufgenommen werden können.

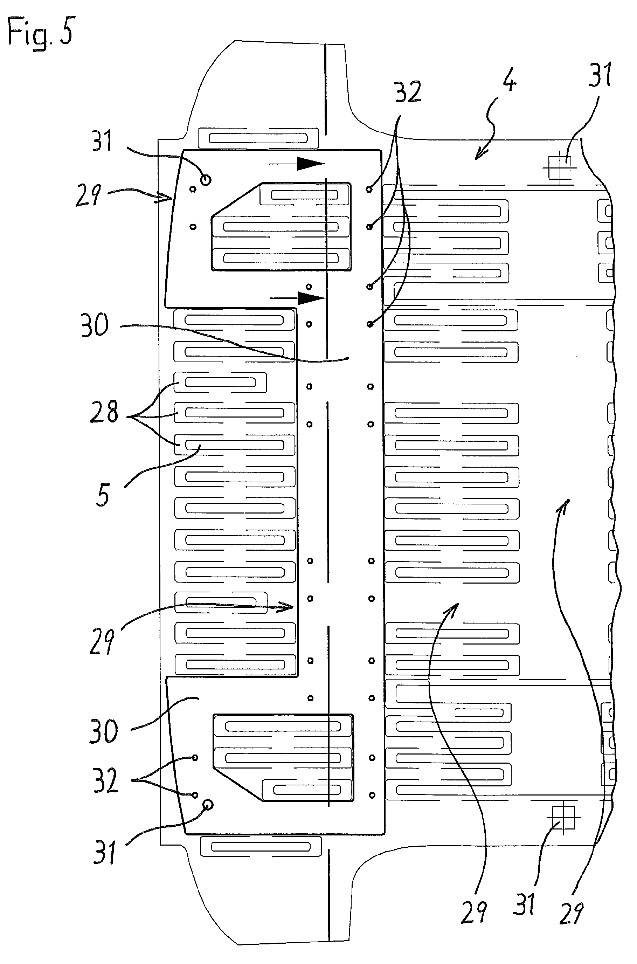

In Figur 5 ist lediglich beispielhaft eine Draufsicht auf einen Fahrzeugboden 4 abgebildet, der zahlreiche vorspringende Versteifungselemente 28 aufweist, die jeweils als Sicke 5 ausgebildet sind. Die Versteifungselemente 28 erstrecken sich im Wesentlichen in Längsrichtung des Fahrzeugbodens 4. In einzelnen Bereichen 29 des Fahrzeugbodens 4 sind keine vorspringenden Versteifungselemente 28, bzw. Sicken 5 angeordnet.

Eine Befestigungsplatte 30 erstreckt sich im Wesentlichen über die gesamte Breite des Fahrzeugbodens 4 und ist hinsichtlich ihrer Kontur an Bereiche 29 ohne vorspringende Sicken 5 angepasst. Die Befestigungsplatte 30 ist dünner als die Höhe der vorspringenden Sicken 5 und kann deshalb in den Bereichen 29 auf dem Fahrzeugboden 4 angeordnet werden, ohne dass eine Oberseite der Befestigungsplatte 30 über die vorspringenden Sicken 5 hinausragt.

Die Befestigungsplatte 30 ist an zwei gegenüberliegenden Befestigungspunkten 31 mit dem Fahrzeugboden 4 verbunden. Die Befestigungsplatte weist Bohrungen 32 auf, die sowohl als Führungselemente die Ausrichtung eines Befestigungsprofils 1 auf der Befestigungsplatte 30 erleichtern als auch in Verbindung mit geeigneten Befestigungsmitteln wie beispielsweise Schrauben oder Stiften eine zusätzliche Festlegung des Befestigungsprofils 1 auf der Befestigungsplatte 30 ermöglichen.

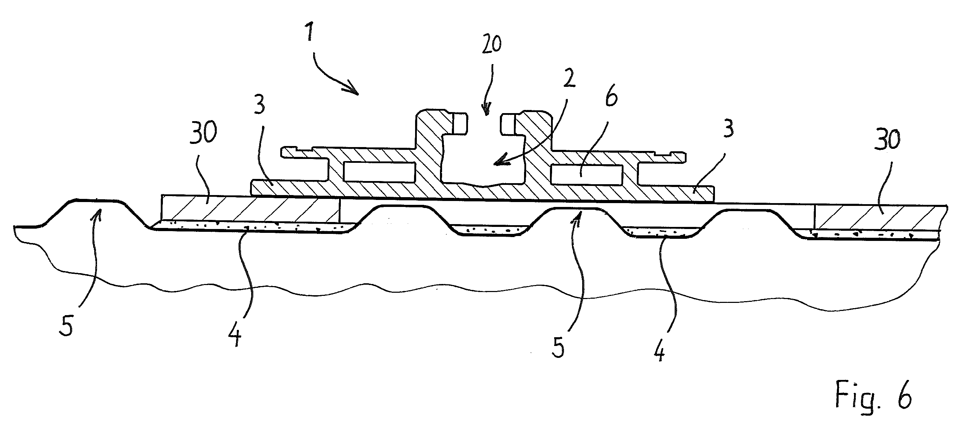

In Figur 6 ist eine Schnittansicht gemäß Figur 1 abgebildet, die ein Befestigungsprofil 1 zeigt, dass auf der Befestigungsplatte 30 festgelegt ist, die ihrerseits auf dem Fahrzeugboden 4 verklebt ist. Die Aufbauhöhe hat sich im Vergleich zu der Ausführung gemäß Figur 1 ohne zusätzliche Befestigungsplatte 30 nicht verändert. Die von einer nicht dargestellten Sitzeinrichtung über das Befestigungsprofil 1 eingeleiteten Kräfte können großflächig über die Befestigungsplatte 30 in den Fahrzeugboden 4 eingeleitet werden.

Eine Sitzeinrichtung, insbesondere eine Sitzbank wird üblicherweise über zwei oder drei in Längsrichtung nebeneinander angeordnete und parallel ausgerichtete Kufen 13 in jeweils einem der Kufe 13 zugeordneten Befestigungsprofil 1 geführt und festgelegt. Zur Befestigung der Sitzeinrichtung sind demzufolge mindestens zwei und gegebenenfalls mehrere Befestigungsprofile 1 erforderlich. Eine Befestigungsplatte 30 kann einem einzelnen Befestigungsprofil 1 zugeordnet sein oder sich über die Breite des Fahrzeugbodens 4 erstrecken, so dass die zwei oder mehreren Befestigungsprofile 1 jeweils auf der Befestigungsplatte 30 festgelegt werden können. Durch die Verwendung von zwei in Längsrichtung beabstandet angeordneten Befestigungsplatten 30 können die Ausrichtung und Festlegung der Befestigungsprofile 1 zusätzlich unterstützt und die maximale Kraftaufnahme vergrößert werden.

## Patentansprüche

1. Befestigungsvorrichtung für eine Sitzvorrichtung, insbesondere für eine Sitzbank, in einem Fahrzeug, mit einem Befestigungsprofil (1), das auf einem Fahrzeugboden (4) festlegbar ist und eine in Längsrichtung verlaufende Befestigungsnut (2) mit einem Längsschlitz (20) aufweist, und mit einer Kufe (13), die mit der Sitzeinrichtung verbindbar ist und die längs des Befestigungsprofils (1) verschiebbar gelagert und in der Befestigungsnut (2) des Befestigungsprofils (1) formschlüssig festlegbar ist, wobei die Kufe (13) an einer dem Befestigungsprofil (1) zugewandten Unterseite eine in die Befestigungsnut (2) ragende Seitenführungseinrichtung aufweist, die beabstandet zu dem Längsschlitz (20) der Befestigungsnut (2) eine seitliche Verlagerung der Kufe (13) begrenzt, **dadurch gekennzeichnet, dass** das Befestigungsprofil (1) mindestens eine Gleitfläche (23) für die Kufe (13) aufweist, die relativ zu einer die Befestigungsnut (2) umgebenden Oberfläche erhaben angeordnet ist und dass Aussparungen oder Bohrungen (24) im Bereich der Befestigungsnut (2) zur Arretierung der Kufe (13) beabstandet zu der mindestens einen Gleitfläche (23) angeordnet sind.

2. Befestigungsvorrichtung nach Anspruch 1, **dadurch gekennzeichnet, dass** die Seitenführungseinrichtung eine um eine vertikale Achse drehbar gelagerte Führungsrolle (18) ist.

3. Befestigungsvorrichtung nach Anspruch 1 oder Anspruch 2, **dadurch gekennzeichnet, dass** die Gleitfläche (23) erhaben gegenüber den beabstandet zueinander entlang der Befestigungsnut (2) angeordneten Aussparungen oder Bohrungen (24) angeordnet ist .

4. Befestigungsvorrichtung nach einem der vorangehenden Ansprüche, **dadurch gekennzeichnet, dass** das Befestigungsprofil (1) eine dem Fahrzeugboden (4) zugewandte Bodenplatte (3) aufweist, deren Breite quer zur Längsrichtung des Befestigungsprofils (1) mehr als 15 cm, vorzugsweise mehr als 20 cm oder mehr als 25 cm beträgt.

5. Befestigungsvorrichtung nach einem der vorangehenden Ansprüche, **dadurch gekennzeichnet, dass** das Befestigungsprofil (1) benachbart zu der Befestigungsnut (2) mindestens einen kastenförmigen Hohlraum (6) aufweist.

6. Befestigungsvorrichtung nach Anspruch 5, **dadurch gekennzeichnet, dass** eine der Sitzeinrichtung (25) zugewandte Oberfläche (7) des kastenförmigen Hohlraums einen kleineren Abstand zur Bodenplatte (3) als eine Oberseite (8) des die Befestigungsnut (2) umgebenden Profilabschnitts aufweist.

7. Befestigungsvorrichtung nach einem der vorangehenden Ansprüche, **dadurch gekennzeichnet, dass** die Befestigungsvorrichtung eine quer zu dem Befestigungsprofil (1) angeordnete und sich seitlich über das Befestigungsprofil (1) hinaus erstreckende Befestigungsplatte (30) aufweist.

8. Befestigungsvorrichtung nach Anspruch 7, **dadurch gekennzeichnet, dass** sich die Befestigungsplatte (30) im Wesentlichen über die Breite des Fahrzeugbodens (4) erstreckt.

9. Befestigungsvorrichtung nach Anspruch 7 oder Anspruch 8, **dadurch gekennzeichnet, dass** die Formgebung der Befestigungsplatte (30) an Bereiche des Fahrzeugbodens (4) angepasst ist, die keine nach oben vorspringenden Versteifungselemente (28) aufweisen.

10. Befestigungsvorrichtung nach einem der Ansprüche 7 bis 9, **dadurch gekennzeichnet, dass** die Befestigungsplatte (30) an vorgegebenen Zurrpunkten oder Befestigungspunkten (31) an dem Fahrzeugboden (4) festlegbar ist.

11. Befestigungsvorrichtung nach einem der Ansprüche 7 bis 10, **dadurch gekennzeichnet, dass** die Befestigungsplatte (30) Führungselemente (32) für das Befestigungsprofil (1) aufweist.

12. Befestigungsvorrichtung nach Anspruch 11, **dadurch gekennzeichnet, dass** die Befestigungsplatte (30) Befestigungsmittel zur Festlegung eines Befestigungsprofils (1) aufweist.

## Claims

1. Mounting device for a seat device, in particular for a seat bench, in a vehicle, with a fastening profile (1) which can be fixed to a vehicle floor (4) and which comprises a fastening groove (2) having a longitudinal slot (20) and running in the longitudinal direction, and with a runner (13) connectable to the seat device and supported alongside the fastening profile (1) in a displaceable manner and which can be fixed in the fastening groove (2) of the fastening profile (1) in a form-fit manner, wherein the runner (13) on a bottom side facing the fastening profile (1) comprises a side guiding device protruding into the fastening groove (2), which side guiding device limits a lateral displacement of the runner (13) spaced from the longitudinal slot (20) of the fastening groove (2), **characterized in that** the fastening profile (1) comprises at least one sliding surface (23) for the runner (13) with the sliding surface being arranged in a raised manner relative to a surface surrounding the fastening groove (2) and **in that** recesses or drill holes (24) for arresting the runner (13) are arranged in the region of the fastening groove (2) spaced from the at least one sliding surface (23).

2. Mounting device according to claim 1, **characterized in that** the side guiding device is a guiding roller (18) rotatably supported around a vertical axis.

3. Mounting device according to claim 1 or claim 2, **characterized in that** the sliding surface (23) is arranged in a raised manner relative to the recesses or drill holes (24) being arranged spaced to one another along the fastening groove (2).

4. Mounting device according to one of the preceding claims, **characterized in that** the fastening profile (1) comprises a base plate (3) facing the vehicle floor (4), the width of which plate transversely to the longitudinal direction of the fastening profile (1) is more than 15 cm, preferably more than 20 cm or more than 25 cm.

5. Mounting device according to one of the preceding claims, **characterized in that** the fastening profile (1) comprises at least one box-shaped cavity (6) adjacent to the fastening groove (2).

6. Mounting device according to claim 5, **characterized in that** a surface (7) of the box-shaped cavity facing the seat device (25) has a smaller distance to the base plate (3) than an upper side (8) of the profile section surrounding the fastening groove (2).

7. Mounting device according to one of the preceding claims, **characterized in that** the mounting device comprises a fastening plate (30) arranged transversely to the fastening profile (1) and extending laterally beyond the fastening profile (1).

8. Mounting device according to claim 7, **characterized in that** the fastening plate (30) essentially extends over the width of the vehicle floor (4).

9. Mounting device according to claim 7 or claim 8, **characterized in that** the shape of the fastening plate (30) is adapted to regions of the vehicle floor (4) that do not have upwardly-protruding stiffening elements (28).

10. Mounting device according to one of the claims 7 to 9, **characterized in that** the fastening plate (30) can be fixed to predetermined lashing points or fastening points (31) on the vehicle floor (4).

11. Mounting device according to one of the claims 7 to 10, **characterized in that** the fastening plate (30) comprises guide elements (32) for the fastening profile (1).

12. Mounting device according to claim 11, **characterized in that** the fastening plate (30) comprises fastening means for fixing a fastening profile (1).

## Revendications

1. Dispositif de fixation pour un dispositif de siège, plus particulièrement pour une banquette, dans un véhicule, avec un profilé de fixation (1) qui peut être fixé sur un plancher de véhicule (4) et qui dispose d'une rainure de fixation (2) s'étendant longitudinalement et présentant une fente longitudinale (20), et avec un patin (13) qui peut être lié au dispositif de siège et qui est logé de manière coulissante le long du profilé de fixation (1) et qui peut être fixé par obstacle dans la rainure de fixation (2) du profilé de fixation (1), le patin (13) disposant, sur un côté inférieur orienté vers le profilé de fixation (1), d'un dispositif de guidage latéral se dressant dans la rainure de fixation (2), ce dispositif de guidage latéral étant disposé de manière espacée par rapport à la fente longitudinale (20) de la rainure de fixation (2) et limitant un déplacement latéral du patin (13), **caractérisé en ce que** le profilé de fixation (1) dispose d'au moins une surface de glissement (23) pour le patin (13), surface qui est disposée en relief par rapport à une surface se trouvant autour de la rainure de fixation (2) et que des évidements ou des alésages (24) sont disposés au niveau de la rainure de fixation (2) afin d'arrêter le patin (13) disposé de manière espacée par rapport à ladite au moins une surface de glissement (23).

2. Dispositif de fixation selon la revendication 1, **caractérisé en ce que** le dispositif de guidage latéral est un galet de guidage (18) logé de manière orientable autour d'un axe vertical.

3. Dispositif de fixation selon l'une des revendications 1 ou 2, **caractérisé en ce que** la surface de glissement (23) est disposée en relief par rapport aux évidements ou alésages (24) se trouvant, espacés les uns des autres, le long de la rainure de fixation (2).

4. Dispositif de fixation selon l'une quelconque des revendications précédentes, **caractérisé en ce que** le profilé de fixation (1) dispose d'une plaque de base (3) orientée vers le plancher du véhicule (4), plaque dont la largeur transversale par rapport au sens de la longueur du profilé de fixation (1) s'élève à plus de 15 cm, de préférence à plus de 20 cm ou à plus de 25 cm.

5. Dispositif de fixation selon l'une quelconque des revendications précédentes, **caractérisé en ce que** le profilé de fixation (1) adjacent à la rainure de fixation (2) dispose d'au moins une cavité (6) en forme de bloc.

6. Dispositif de fixation selon la revendication 5, **caractérisé en ce qu'**une surface (7) de la cavité en forme de bloc, surface (7) orientée vers le dispositif de siège (25), dispose d'une distance inférieure par rapport à la plaque de base (3) qu'un côté supérieur (8) de la section profilée se trouvant autour de la rainure de fixation (2).

7. Dispositif de fixation selon l'une quelconque des revendications précédentes, **caractérisé en ce que** le dispositif de fixation dispose d'une plaque de fixation (30) étant disposée transversalement par rapport au profilé de fixation (1) et s'étendant latéralement au-delà du profilé de fixation (1).

8. Dispositif de fixation selon la revendication 7, **caractérisé en ce que** la plaque de fixation (30) s'étend essentiellement au-delà la largeur du plancher de véhicule (4).

9. Dispositif de fixation selon l'une des revendications 7 ou 8, **caractérisé en ce que** la forme de la plaque de fixation (30) est adaptée à des zones du plancher de véhicule (4) qui ne disposent pas d'éléments de renforcement (28) faisant saillie vers le haut.

10. Dispositif de fixation selon l'une des revendications 7 à 9, **caractérisé en ce que** la plaque de fixation (30) peut être fixée via des points d'arrimage ou des points de fixation (31) se trouvant sur un plancher de véhicule (4).

11. Dispositif de fixation selon l'une des revendications 7 à 10, **caractérisé en ce que** la plaque de fixation (30) dispose d'éléments de guidage (32) pour le profilé de fixation (1).

12. Dispositif de fixation selon la revendication 11, **caractérisé en ce que** la plaque de fixation (30) dispose de moyens de fixation auxquels peut être fixé un profilé de fixation (1).
